# EUROPÄISCHE PATENTANMELDUNG

(11) **EP 4 776 478 A1**
(43) Veröffentlichungstag der Anmeldung: **15.07.2026**
(21) Anmeldenummer: 25151667.0
(22) Anmeldetag: 14.01.2025
(51) Int. Cl.: H02K 1/24, H02K 15/022, H02K 15/121, H02K 15/165, H02K 1/27

(54) **VERFAHREN ZUR HERSTELLUNG EINES RELUKTANZROTORS EINER DYNAMOELEKTRISCHEN MASCHINE FÜR HOCHDREHZAHL**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Warmuth, Matthias, 97618 Windshausen (DE)
(74) Vertreter: Michalski Hüttermann & Partner mbB

(57) **Zusammenfassung**

Die Erfindung betrifft ein Verfahren zur Herstellung eines Reluktanzrotors (3) einer dynamoelektrischen Maschine (1),
- Fertigen mehrerer Rotorbleche (10), die axial entlang einer Drehachse (9) auf einer Welle (5) hintereinander zu einem Blechpaket des Reluktanzrotors (3) angeordnet werden und dabei je nach Blechschnitt zwei- vier- oder mehrere geradzahlige Pole bilden, indem pro Rotorblech (10) Flussleitbereiche (13) durch unmagnetische, bogenartige Flusssperren (14) voneinander getrennt sind und so q-Achsen (12) und d-Achsen (11) des Reluktanzrotors (3) bilden, wobei die Rotorbleche einstückig ausgeführt sind und einen aus Stegen gebildeten Außenring bilden, wobei über zumindest an einer Stirnseite des Blechpakets angeordnete Verteilscheibe (20) die zumindest radial außenliegenden Flusssperren (14) über die gesamte axiale Länge des Reluktanzrotors (3) mit einem flüssigen Kleber (19) bei axialer Verspannung des Blechpakets ausgefüllt werden, so dass sich die vorgesehenen Flusssperren (14) mit Kleber (19) füllen,
- Verfestigen des mit Kleber versehenen Blechpakets,
- Überdrehen des verfestigte Blechpaket, wobei die den Außenring bildenden Stege entfernt werden, so dass die Flusssperren (14) nach außen hin metallisch offen sind und hierdurch die radial außenliegenden Enden der Flusssperren (14) in den äußeren Umfang der Rotorbleche (10) münden,
- Aufträufeln von Harz oder einem Harz-Härtersystem auf die abgedrehte Außenfläche des Reluktanzrotors (3),
- zeitlich davor oder zeitgleich oder im zeitlichen Anschluss, an diesen Träufelvorgang wird eine Bandage auf den abgedrehten Außenumfang des Reluktanzrotors (3) gespannt.

## Beschreibung

Die Erfindung betrifft einen Reluktanzrotor einer dynamoelektrischen Maschine, insbesondere Reluktanz-Synchronmaschine, ein Verfahren zu dessen Herstellung, eine dynamoelektrische Maschine mit einem derartigen Reluktanzrotor, als auch die Verwendung einer derartigen dynamoelektrischen Maschine.

Eine dynamoelektrische Maschine ist eine Vorrichtung, die elektrische Energie in mechanische Energie, insbesondere Bewegungsenergie (Motorbetrieb) und/oder mechanische Energie in elektrische Energie (Generatorbetrieb) umformt. Bei einer rotierenden dynamoelektrischen Maschine ist ein Stator vorgeshen, in dessen sogneannter Statorbohrung ein Rotor drehbar gelagert angeordnet ist. Der Stator ist gegenüber dem Rotor drehfest angeordnet. Der Stator und der Rotor sind mittels eines magnetischen Flusses verkettet, wodurch im Motorbetrieb eine Kraftwirkung erzeugt wird, die den Rotor gegenüber dem Stator drehend antreibt und im Generatorbetrieb dem Rotor zugeführte mechanische Energie in elektrische Energie umwandelt.

Reluktanzmaschinen weisen bauartbedingt eine Rotorstruktur auf, die durch flussleitende Teile und flusssperrende Teile gekennzeichnet ist. Um diese Struktur zusammenzuhalten werden üblicherweise innen und außen Stege vorgesehen, die jedoch einen unerwünschten magnetischen Streufluss zulassen und die Effizienz der Reluktanzmaschine reduzieren.

Ein Rotor für einen Reluktanzmotor ist z.B. aus der US 5 818 140 A bekannt. Darin ist ein Rotor beschrieben, dessen Blechpaket aus Rotorblechen besteht, die jeweils Ausstanzungen aufweisen. Dieser Rotor wird dort auch als Vagati-Rotor bezeichnet. Durch die Ausstanzungen ergeben sich geschwungene, streifenförmige Blechabschnitte, die als Flussleitabschnitte dienen und den magnetischen Fluss in der für die Bereitstellung der nötigen Reluktanz des Rotors nötigen Weise führen. Zwischen den einzelnen Flussleitabschnitten befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute.

Die Leistungsfähigkeit eines derartigen Rotors hängt entscheidend von der Ausbildung der Bereiche mit hoher magnetischer Leitfähigkeit ab, die weiterhin als Lamellen bezeichnet werden. Diese Bereiche sind um eine oder mehrere Achse(n) mit hoher magnetischer Leitfähigkeit (d-Achse) angeordnet und wechseln sich in Umfangsrichtung mit Bereichen niedrigerer magnetischer Leitfähigkeit ab, die um eine oder mehrere Achse(n) mit niedrigerer magnetischer Leitfähigkeit (q-Achse) angeordnet sind. Um diese unterschiedlichen magnetischen Leitfähigkeiten innerhalb des Rotors zu erreichen, sind die Rotorbleche beispielsweise mit ausgestanzten Ausnehmungen versehen. Hierzu gibt es die unterschiedlichsten Ausführungsformen.

Für eine möglichst hohe Drehmomentausbeute werden die Rotorbleche so dimensioniert, dass eine Ersatzschaltbild-Reaktanz in Richtung der q-Achse möglichst klein ist. In Richtung der q-Achse sind deshalb üblicherweise viele und/oder großflächige Ausstanzungen im Rotorblech vorgesehen. Dies führt aber zu einer Schwächung der mechanischen Stabilität, so dass die Drehzahl begrenzt ist. Im Hinblick auf eine Verbesserung der mechanischen Stabilität weisen die Rotorbleche einen umlaufenden Außenring auf. Derartige Rotorbleche sind z.B. aus der JP 2001/238418 A bekannt. Darüber hinaus sind die Ausnehmungen oder Ausstanzungen etwa mittig durch einen Steg unterbrochen.

In der EP 0 621 677 A2 ist eine weitere Rotoranordnung für einen Reluktanzmotor beschrieben, die keinen Außenring aufweisen. Die Innenräume sind mit Glasfasern und einem wärmegehärteten Epoxid ausgefüllt. Die Rotoranordnung weist an beiden Enden je eine Endkappe auf. Um die mechanische Stabilität der Rotoranordnung zu erhöhen, sind vier Stege vorgesehen, die sich im Umfangbereich der Rotorbleche zwischen den Endscheiben erstrecken. Je zwei gegenüberliegende Stege sind zudem über sich in radiale Richtung erstreckende Schrauben miteinander verbunden, so dass einzelne Rotorbleche, durch welche die Schrauben verlaufen, eine zusätzliche, diametral verlaufende Bohrung (receiving bore) aufweisen. Es ist somit ein aufwändiges Befestigungssystem erforderlich, welche mehrere Befestigungselemente in Axial- und Radialrichtung umfasst, um die Rotoranordnung zusammenzuhalten.

In der EP 2 965 403 A1 wird ein Rotor beschreiben, bei dem die Flusssperren mit einem Kunststoff ausgefüllt werden. Die Befüllung bildet zusammen mit speziellen Konturen im Blech (Bohrungen und Schwalbenschwanznuten) Formschlüsse aus, womit ein Zusammenhalt der Blechstruktur erreicht werden soll. Dies gilt auch nach einem Überdrehen des Rotors für den Luftspalt. Nachteilig ist jedoch, dass die, für die Formschlüsse erforderlichen Konturen im Blech den Effizienzgewinn der dynamoelektrischen Maschine schmälern. Um also eine signifikante Drehzahlsteigerung zu erzielen, sind große geometrisch Formschlüsse erforderlich.

In den Patent Abstract of Japan zur JP 2000-299947 A ist ein Reluktanzmotor beschrieben, bei dem zur Verbesserung des Wirkungsgrads magnetische Pfadbildungselementen an einem Rotor ohne Verbindungsstege befestigt sind. Die magnetischen Pfadbildungselemente sind durch Zwischenräume voneinander getrennt, die mit einem Adhäsionssystemharz ausgefüllt sind. Das Adhäsionssystemharz trennt zum einen die magnetischen Pfadbildungselemente magnetisch voneinander und verbindet sie zum anderen mechanisch miteinander.

Aus den Patent Abstract of Japan zur JP 2002-095227 A ist ein Rotor eines Reluktanzmotors bekannt, der einen aus Blechen gestapelten Rotor aufweist. In die Bleche sind bogenförmige Schlitze eingebracht, die an ihrem Umfang schwalbenschwanzförmige Ausnehmungen aufweisen. Die Schlitze und die Ausnehmungen sind mit einem Harz gefüllt.

Nachteilig dabei ist, dass deshalb bei einem Reluktanzmotor zur erhöhten Drehzahleignung der Reluktanzrotor mit relativ breiten Stegen ausgeführt werden muss, womit jedoch die Effizienz des Reluktanzmotors reduziert wird.

Ausgehend davon besteht die Aufgabe der Erfindung darin, einen Reluktanzrotor zu schaffen, der vergleichsweise einfach herzustellen ist und dabei dennoch eine verbesserte Funktionalität und damit auch eine verbesserte Effizienz eines Reluktanzmotors aufweist.

Die Lösung der gestellten Aufgabe gelingt durch die Merkmalskombination der unabhängigen Ansprüche.

Vorteilhafte Ausgestaltungen der Erfindung sind den davon abhängigen Ansprüchen zu entnehmen.

Die in Bezug auf den Rotor nachstehend angeführten Vorteile und bevorzugten Ausgestaltungen lassen sich sinngemäß auf das Verfahren zum Herstellen eines Rotors übertragen.

In der Erfindung wird ein Reluktanzrotor beschrieben, der - eingesetzt in einen Reluktanzmotor - zu einer erhöhten Effizienz beiträgt, und dabei u.a eine verbesserte Drehzahltauglichkeit aufweist. Dazu werden jedoch keine Formschlüsse, sowie spezielle Konturen im Blech wie im Stand der Technik benötigt. Die Blechkontur des Reluktanzrotors kann ausschließlich auf höchstmögliche Effizienz ausgelegt werden.

Die in Bezug auf das Verfahren zum Herstellen eines Reluktanzrotors angeführten Vorteile und bevorzugten Ausgestaltungen lassen sich sinngemäß zumindest teilweise auch auf den Reluktanzrotor übertragen.

Dazu werden erfindungsgemäß die Rotorbleche, wie üblich, zunächst außen mit Stegen ausgestattet, um eine Stabilität der Rotorbleche während des Herstellprozesses (z.B. Stanzen) zu haben. Der mittlere Steg - auch als Mittenssteg bezeichnet - kann in seinen Dimensionen etwas reduziert werden, oder bei kleineren Achshöhen komplett entfallen.

Die Rotorbleche werden auf die Welle geschichtet, die auch die spätere Antriebswelle des Reluktanzmotors bildet und mit zumindest einer Verteilscheibe an einer Stirnseite des Blechpakets positioniert.

Unter axialer Verspannung des Blechpakets wird ein Kleber über die Verteilscheibe eingespritzt, so dass sich die Flusssperren mit Kleber befüllen. Vorzugsweise wird ein 2 Komponentenkleber verwendet.

Die Verteilscheibe, welche dem erfindungsgemäßen Vergussprozess zugrunde liegt und zumindest an einer Stirnseite des Blechpakets des Reluktanzrotors angebracht wird, ist über Positionierelemente der Verteilscheibe an dem Blechpaket des Reluktanzrotors fixiert. Damit wird eine axiale Abstützung der Verteilscheibe auf der Welle vermieden, was den Herstellungsprozess des Reluktanzrotors weiter vereinfacht.

Diese Verteilscheibe wird formschließend, stirnseitig an das Blechpaket angebracht und kann optional im Nachgang des Vergussprozesses auch zur Wuchtung des Reluktanzrotors genutzt werden.

Die Verteilscheibe weist auf der dem Blechpaket des Reluktanzrotors zugewandten Seite zumindest einen umlaufenden, zum Blechpaket hin, insbesondere zu den Polen des Reluktanzrotors, offenen Verteilkanal auf.

Auf der dem Blechpaket abgewandten Seite der Verteilscheibe ist zumindest eine Injektionsöffnung, für eine, insbesondere druckbehaftete Zuführung für einen Kleber vorgesehen, um den Verteilkanal mit einer Vergussmasse und damit das Blechpaket des Reluktanzrotors zu füllen.

Optional weist der Verteilkanal - im umfänglichen Verlauf betrachtet - im Bereich einer Flusssperre eines Pols des Reluktanzrotors radiale und/oder axiale Erweiterungen des Verteilkanals auf - als eine Art Depot - um ausreichend Vergussmasse für den jeweiligen magnetischen Pol bereitstellen zu können.

Der Verteilkanal und optional dessen Erweiterung schließen mit der Stirnseite des Blechpakets formschlüssig und dicht ab, um während des Vergussprozesses einen dementsprechenden Druck und damit die erforderlichen Scherkräfte in der Vergussmasse aufbauen zu können. Der umlaufende Verteilkanal dient der Versorgung der axialen Aussparungen der magnetischen Pole mit der Vergussmasse oder einem Kleber.

Die Verteilscheibe kann einen oder mehrere umfänglich verlaufende Verteilkanäle und/oder Injektionsöffnungen aufweisen, um eine möglichst zügige Füllung des Blechpakets bzw. der Flusssperren zu erhalten.

Die Fixierung der Verteilscheibe an der Stirnseite erfolgt über Positionierelemente, die beispielsweise zapfen- oder dübelähnlich ausgeführt sind und mit der Verteilscheibe einstückig ausgebildet sind.

Die Verteilscheibe wird mittels ihren Positionierelementen vor dem Vergussprozess axial an der Stirnseite des Blechpakets des Rotors fixiert, indem die Positionierelemente in vorhandene, dazu korrespondierenden Öffnungen des Blechpakets, wie Aussparungen, Trägheitsausnehmungen, Flusssperren etc. verankert, insbesondere kraftschlüssig verankert werden.

Die "Widerstandskraft" der Positionierelemente bzw. Länge der Zapfen oder Dübel mit ihrer Klemmfunktion ist somit so zu bemessen, dass diese zumindest gleich, aber besser, höher ist als die während des Herstellprozesses auftretenden axialen Abstoßkräfte, so dass sich die Verteilscheibe während des Vergussprozesses nicht von der Stirnseite des Blechpakets ablöst und weiterhin seinen axialen Formschluss beibehält.

Die angegossenen Zapfen sind deshalb erfindungsgemäß mit einem leichten Übermaß gegenüber den dazu korrespondierenden Öffnungen des Blechpakets ausgebildet, idealerweise mit einer Kreuzkontur.

Als Alternative dazu ist auch eine Spreizform der Positionierelemente ähnlich einem Dübel vorstellbar.

Diese Positionierelemente ermöglichen ein koaxiales Verklemmen oder Verkrallen der Verteilscheibe an der Stirnseite des Blechpakets.

Der Verteilkanal kann in seinem umfänglichen Verlauf kreisrund ausgeführt sein. Ebenso ist es möglich den Verteilkanal mit radial und/oder axial ersteckenden Erweiterungen und/oder gewellt auszuführen, um möglichst schnell einen ausreichenden Füllgrad in den Ausnehmungen zu erhalten. Dabei "folgt" der Verlauf des Verteilkanals im Wesentlichen der Polanordnung. Dies betrifft sowohl den Überdeckungsbereich der Verteilscheibe als auch den Überdeckungsbereich des Verteilkanals an der Stirnseite des Blechpakets.

Die Verteilscheibe kann optional auf der dem Verteilkanal abgewandten Seite der Verteilscheibe zusätzlich mit Lüfterflügeln ausgestattet werden, um im Betrieb der Reluktanzmaschine insbesondere Wickelkopfraum eine Kühlung zu erzeugen und somit eine Entwärmung des Reluktanzrotors und/oder des Wickelkopfraumes an der Stirnseite des Stators zu verbessern.

Die Verteilscheibe kann als Spritzgussteil, als Tiefziehteil oder in 3D Druck-Verfahren hergestellt werden. Vorzugsweise ist die Verteilscheibe aus Kunststoff oder nicht magnetischem Metall gefertigt. Die Positionierelemente, wie Zapfen oder Dübel oder beispielsweise auch die optionalen Lüfterflügel bilden mit der Verteilscheibe eine einstückige Komponente.

Während des Ausspritzvorgangs der Ausnehmungen über die Verteilscheibe kann das Blechpaket des Rotors über diese Verteilscheiben mit einem Werkzeug zusätzlich axial verspannt werden, um eine Abdichtung der Verteilscheibe zum Blechpaket bzw. der einzelnen Bleche zueinander auf jeden Fall zu gewährleisten.

Die Verteilscheibe wird an dem Blechpakets des Rotors axial fixiert und positioniert und benötigt nicht die Welle dazu; für die Verteilscheibe ist also keine Klemmung auf der Welle erforderlich.

Durch Einsatz der Verteilscheibe und deren Abdichtung des zur Stirnseite hin offenen Verteilkanals wird optinal eingesetztes Verspannwerkzeug vor Verschmutzung geschützt und kann deshalb im Anschluss für Folgeaktionen unmittelbar - ohne weitere Säuberungsaktionen - weiter benutzt werden.

Das optinale Verspannwerkzeug dient auch während des Befüllungsvorganges der Paketierung des Blechpakets des Reluktanzrotors. Die Paketierung - also eine axiale Krafteinwirkung auf das Blechpaket - erfolgt dabei über die Verteilscheiben und/oder auch über den "radialen Freiraum" zwischen Verteilscheibe und Welle.

Die Verteilscheibe kann in Richtung Rotorpaket elastische Geometrien aufweisen, alternativ Dichtungsmaterial, welches eine axiale Abdichtung während der Verspannung während des Vergussprozesses mit Vergussmasse bzw. Kleber verbessern.

Optional werden auf beiden Seiten des Blechpakets des Reluktanzrotors, also den Stirnseiten des Blechpakets, Verteilscheiben positioniert, um auch ggf. die Paketierung der Bleche zu verbessern. Dabei ist zumindest eine Verteilscheibe mit einer Zuführung, also einer Kleber-Versorgungs-Öffnung, also einer Injektionsöffnung ausgestattet. Um beide Teile gleich zu gestalten, kann auch generell eine Versorgungsöffnung vorgesehen werden, die durch eine Gusshaut verschlossen ist. Bei Bedarf kann diese Gusshaut vor dem Vergießen aus der Verteilscheibe ausgebrochen werden. Es müssen demnach weniger Teile vorgehalten werden.

Dieses Herstellverfahren eignet sich auch für - axial betrachtet - gestaffelte Teilblechpakete des Rotors. Die Ausnehmungen der einzelnen Pole weisen in ihrem axialen Verlauf ausreichende Überschneidungen auf, um eine Vergussmasse auch bis an das andere axiale Ende des Blechpakets eines Pols fördern zu können. Flusssperren axial folgender Teilblechpakete eines Pols haben in ihrer Fläche ausreichend Überschneidung um eine ordnungsgemäße befüllung zu gewährleisten. Das gesamte Blechpaket hat jedoch - wie oben bereits ausgeführt - mindestens auf einer Stirnseite eine Verteilscheibe.

Vorteilhafterweise erfolgt die Beschickung des Rotors mit Kleber oder allgemeiner, mit fließfähiger, klebfähiger Vergussmasse als aufsteigender Verguss bei erhöhtem Vergussdruck.

Bei nur einer Verteilscheibe sind die Ausnehmungen auf der anderen Stirnseite des Blechpakets verschlossen, z.B. durch eine Endscheibe, so dass keine Vergussmasse austreten kann und sich ein thixotropischer Effekt der Vergussmasse einstellen kann.

Die Achse des Rotors ist dabei im Wesentlichen vertikal. Insbesondere durch einen aufsteigenden Verguss kann in einfacher Art und Weise eine blasenfreie Applikation herbeigeführt werden.

In einem anderen möglichen Verfahrensschritt erfolgt diese Beschickung des Rotors mit Vergussmasse von oben, d.h. die Vergussmasse wird von obenher eingefüllt. Die vorhandene Luft in den Flusssperren drückt sich dabei zwischen den Blechen heraus. Es besteht somit keine Gefahr einer Lunkerbildung. Aufgrund des thixotropischen Verhaltens der Vergussmasse tritt kein Kleber durch bzw. zwischen den Blechen des Blechpakets heraus.

Der Einfüllvorgang erfolgt unabhängig davon, ob die Pole des Rotors achsparallel verlaufen, geschrägt verlaufen oder gestaffelt angeordnet sind. Entscheidend ist immer, dass die Vergussmasse axial durch die Flusssperren eines Pols und/oder die oben erwähnten Spalte dringen kann und die Flussperren eines Pols füllen kann.

Bei dem Vergussprozess wird ein statisches/dynamisches Mischrohr verwendet, um das Reaktivgemisch in situ zu mischen und direkt im Anschluss über die Verteilscheibe auf zumindest einer Stirnseite des Rotors in den Rotor zu applizieren. Es können auch auf beiden Stirnseiten des Rotors Verteilscheiben vorgesehen sein, um eine Bestückung des Rotors von beiden Seiten vorzunehmen. Dabei ist die Achse des Rotors vorzugsweise horizontal ausgerichtet.

Dabei sind die Verteilscheiben entweder identisch oder derart ausgebildet, dass jede Verteilscheibe lediglich die Hälfte der Pole des Reluktanzrotors, also zumindest deren Flusssperren mit Kleber bzw. Vergussmasse versieht.

Eine beidseitige Beschickung mit Vergussmasse kann vor allem bei axial langen Reluktanzrotoren von Vorteil sein.

Über einen oder mehrere geeignete Injektionsanschlüsse an der Verteilerscheibe können Drücke von bis zu 10 bar, vorzugsweise 4,5 bar, appliziert werden, wodurch die vorzugsweise frisch gemischte, thixotropierte Vergussmasse fließfähig wird und axial, insbesondere axial aufsteigend, in die verbleibenden geometrischen Zwischenräume der Ausnehmungen des Rotors gelangt.

Es wird also die thixotropische Klebermasse in einem statischen oder dynamischen Mischrohr in situ gemischt, wobei die Vergussmasse bei der Zuführung eine Temperatur bis 60°C, insbesondere bis 30°C aufweist, und mit einer Fließgeschwindigkeit von bis zu 10 mm pro Sekunde zugeteilt wird, wobei dabei ein Druck von bis zu 10 bar, insbesondere 4,5 bis 5 bar herrscht, also im Wesentlichen bei Umgebungstemperatur.

Der Prozess des Vergießens kann also nahezu bei Umgebungstemperatur erfolgen, was den Prozess vereinfacht und ein nahezu zeitlich daran unmittelbar anschließendes Weiterverarbeiten des Rotors ermöglicht.

Die Radialebenen zwischen den einzelnen Rotorblechen können mit Kleber versehen sein, müssen dies aber nicht. Dies kann insbesondere durch eine axiale Paketierung zusammen mit der thixotropischen Klebermasse gewährleistet werden. Die Klebermasse füllt also zumindest die Flusssperren, und optional radiale Spalte zwischen den einzelnen Rotorblechen, also die Ebenen, die senkrecht zur Achse stehen.

Ebenso werden Trägheitsöffnungen des Reluktanzrotors nicht mit Kleber versehen. Auch die Bohrungen zur Aufnahme der Zapfen/Dübel der Verteilscheibe werden in der Regel nicht mit Kleber beaufschlagt. D.h. die Zapfen/Dübel sind nicht mit Kleber umgeben.

Die Zapfen/Dübel der Verteilscheibe sind in einer Ausführung jedoch mit Kleber umgeben, sofern sie in den Flusssperren positioniert und dort verankert werden.

Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer versus statischer Druck).

Sobald alle Fließkanäle vollständig gefüllt sind, kommt der Fluss der Vergussmasse zum Erliegen und ist durch eine Änderung des Gesamtdrucks gemäß Bernoulli detektierbar. Bernoullische Druckgleichung (Gesamtdruck = Dynamischer Druck + Statischer Druck).

Ebenso ist eine optische Kontrolle des Vergussprozesses möglich, die einen nicht gewollten Austritt an der Manteloberfläche des zylindrischen Blechpakets detektiert. Dies geschieht vorzugsweise an den schmalen Stegen, die als Randbegrenzungen der Flusssperren zur Manteloberfläche fungieren. Diese können, radial betrachtet, nur wenige Millimeter oder gar nur Bruchteile von Millimetern betragen und werden auch als Randstege bezeichnet.

Die Vergussmasse im Blechpaket des Reluktanzrotor geliert danach drucklos bei Raumtemperatur und härtet innerhalb von 24 Stunden vollständig aus.

Eine Weiterarbeit an und mit dem Reluktanzrotor ohne mechanische Belastung ist schon nach ca. 1 Stunde möglich. Ein Durchdringen des Materials, also der Vergussmasse, durch die Einzelbleche ist durch die Thixotropierung der Vergussmasse verhindert, sodass auf einen vorangehenden Lackierprozess der außenliegenden Mantelfläche verzichtet werden kann.

Erfindungsgemäß werden die Flusssperren des Reluktanzrotors über eine Verteilscheibe mit einer thixotropierte Klebermasse vergossen, welche bei Raumtemperatur geliert und vollständig härtet.

Durch die hohe Füllung und Nutzung von Thixotropieradditiven in der Klebermasse können mittels eines Druckverfahrens die Flusssperren insbesondere aufsteigend gefüllt werden, ohne dass jedoch die Reaktivmasse durch kleine Schlitze, wie z.B. zwischen den Einzelblechen, entweichen kann.

Als Vergussmasse bzw. Kleber wird ein "Gapfiller", vorzugsweise thixotropiertes 2-K Epoxy zum Kleben der Permanentmagnete in ihren jeweiligen Taschen verwendet, mit einer Temperatureignung bis ca. 160 °C. Herkömmliche Klebesysteme sind nur bis 120 °C geeignet.

Bei dem beanspruchten Verfahren weist die Vergussmasse vorteilhafterweise thixotropisches Verhalten auf, wobei die Viskosität infolge eines äußeren steuerbaren Einflusses (z.B. Druck) abnimmt und nach beendigter Beanspruchung wieder in die Ausgangsviskosität zurückkehrt.

Durch Einsatz der thixotropierten Klebermasse kann direkt unmittelbar nach dem Ausspritzen das Verspannwerkzeug gelöst werden. Vergussmasse fließt dabei nicht weg. Die Paketierung des Blechpakets des Reluktanzrotors bleibt erhalten.

Bevor die Klebermasse über eine Leitung oder Schlauch dem Reluktanzrotor über die Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten für die weitere Fertigung und Beschickung in dieFlusssperren vorliegt.

Die Mischung von mindestens zwei Komponenten kann dabei durch einen dynamischen Mischer erfolgen, z.B. einen Speedmixer.

Eine technisch einfachere und kostengünstigere Möglichkeit stellt die statische Mischung der Komponenten dar.

Als Klebermasse in dem Blechpaket des Reluktanzrotors ist als Basismaterial ein Zwei-Komponenten-Kleber vorgesehen, in dem in einer vorgebbaren Menge wärmeleitfähige und/oder eine Gelierzeit die Klebermasse beeinflussende Additive vorhanden sind.

Als zweikomponentiges Basismaterial wird vorzugsweise ein Reaktivkleber auf Basis von Epoxy/Amin oder z.B. Polyurethan/Isocyanat bzw Methaclrylat eingesetzt. Eine Gelierung bei Raumtemperatur ist hierbei nach wenigen Minuten bis einigen Stunden einstellbar, so dass ohne zusätzliche Erwärmung (und damit einhergehender weiterer Verflüssigung des Harzgemisches) eine weitgehende Verfestigung der Klebermasse eintritt. Mit anderen Worten, eine vollständige Härtung bei Raumtemperatur ohne Nachtemperierung ist somit möglich.

Als weiteres Grundmaterial eignen sich auch Polysiloxane und Silikon.

Eine Erholung des Materials, respektive der Viskosität der Klebermasse, ergibt sich nach Abnahme der Scherkräfte (Abnahme des Druckes) innerhalb weniger Minuten, so dass es zu einer Selbstverfestigung der Klebermasse in den vorgesehenen Spalten und/oder Flusssperren kommt und keine Fließwege durch dünne Spalte, insbesondere zwischen den Einzelblechen des Blechpakets des Reluktanzrotors mehr entstehen.

Das Aushärten der Klebermasse geschieht ohne zusätzliche axiale Verspannung, somit ist die Vergussmasse/der Kleber entlang der Flusssperren oder Spalte nicht vorgespannt ist und kann später nicht reißen.

Der Volumenschrumpf eines derartig gefüllten Reluktanzrotors liegt bei unter 1%. Damit werden u.a. Lunkerbildungen vermieden, die die Festigkeit des Reluktanzrotors bei der weiteren Bearbeitung und im Betrieb und die elektromagnetischen und wärmeleitenden Eigenschaften beeinträchtigen könnten.

Die vorzugsweise raumtemperaturhärtende Klebermasse kann, neben einem stark thixotropierten rheologischen Verhalten, durch geeignete Additive wärmeleitfähig (>0,5 W/mK) eingestellt werden. Diese Additive werden vor der Zuführung in die Flusssperren des Reluktanzrotor, insbesondere der Verteilscheibe der Vergussmasse, beigemischt. Dies führt u.a. im Betrieb der dynamoelektrischen Maschine zu einer verbesserten Wärmeabfuhr aus Rotorblechen, da diese durch Wirbelströme und/oder Luftspaltharmonischen aufgeheizt werden können.

Die Wärmeleitfähigkeit der Vergussmasse kann durch Zugabe oder Zumischen verschiedener Füllstoffe erreicht werden. Die dabei vorgesehenen Additive sind Quarzmehl, Quarzgut, BorNitrid (BN), Alox, Kreide. Die einzelnen Komponenten sind zusammen oder auch einzeln beimischbar und können somit bis zu 40 Vol.% der gesamten Vergussmasse ausmachen.

Durch das erfindungsgemäße Verfahren zur Herstellung eines Rotors einer Reluktanz-Synchronmaschine ergeben sich folgende Vorteile:
Das Verfahren ist einfacher und kostengünstiger als bisher bekannte Verfahren, bei denen die Verteilscheiben aus Aluminium sind und diese mit einer Presspassung auf der Welle fixiert sind.

Nach dem Aushärten ist das Rotorpaket so stabilisiert, dass an der Oberfläche das Rotorpaket außen auf Luftspaltmaß überdreht werden kann, ohne dass es zu Verschiebungen der Rotorbleche kommt.

Bei diesem Vorgang werden die Außenstege der Rotorbleche des Blechpakets komplett entfernt, so dass die Flusssperren nach außen hin metallisch offen sind. Die Klebefunktion des Füllmaterials ist entsprechend ausgelegt, den Fliehkräften während dieser und weiteren Bearbeitung sowie den Schnittkräften standzuhalten.

Nach dem Überdrehen des Rotorpakets kann der Träufelvorgang starten. Dabei wird Harz oder ein Harz-Härtersystem auf die abgedrehte Außenfläche aufgeträufelt.

Davor, Parallel oder im Anschluss wird eine Bandage aufgelegt (vorzugsweise Glas- oder Kohlefaser). Der Anfang der Bandage kann auf dem Außendurchmesser der Verteilscheibe erfolgen. Eine entsprechende Geometrie zum Einhängen der Faser kann auf der Verteilscheibe vorgesehen werden. Die Bandage wird dabei mit einer bestimmten Steigung unter Vorspannung am Außenumfang positioniert.

Die Randstege und optinal die Mittenstege der einzelnen Rotorbleche haben dabei während der Fertigung bzw. im Betrieb der Reluktanzmotors folgende Funktionen. Die Randstege sind für den Zusammenhalt der axial geschichteten Rotorbleche auf der späteren Antriebswelle beim Stanzen der Rotorbleche und für die Stabilisierung des Rotorpakets beim Rotor Überdrehen zur Herstellung des Luftspalts notwendig. Die Mittenstege -sofern vorhanden - bieten einen Halt gegen Fliehkräfte im Betrieb des Reluktanzmotors.

Die Verteilscheibe hat somit eine oder mehrere der folgenden Funktionen. Paketieren des Blechpakets des Reluktanzrotors auf der Welle, Verteilung der Klebermasse, Beitrag zur Kühlung der dynamoelektrischen Maschine und Wuchtung des Reluktanzrotors.

Die Klebefunktion des eingesetzten Klebermaterials ist entsprechend ausgelegt, den Fliehkräften während der Bearbeitung sowie den Schnittkräften standzuhalten.

Nach dem Aushärten ist das Rotorpaket durch diese Klebermasse derart stabilisiert und kann außen auf Luftspaltmaß abgedreht werden.

Zusätzliche auf die Welle aufgeschrumpfte Scheiben zum axialen Verspannen des Rotorblechpakets, wie sie generell bei Reluktanzrotoren Anwendung finden, werden bei dieser Technik nicht mehr benötigt, da die Kompaktierung während des Klebevorgangs erfolgt ist.

Neben der Effizienzsteigerung desReluktanzmotors wird somit eine Drehzahlsteigerung auf ≥ 100 m /s Umfangsgeschwindigkeit erreicht.

Die Verteilscheibe kann insbesondere nach der Fertigstelllung des Reluktanzrotors auch zum Auswuchten genutzt werden, indem sie z.B. mit Zapfen ausgestattet ist, um Wucht-Gewichte anzubringen oder auch durch negatives Wuchten mittels Abtragen von Material der Verteilscheibe. Ebenso können auch an der Verteilscheibe Konturen vorhanden sein, die ein Einbringen von Wucht-masse gestatten.

Zusätzliche auf die Welle aufgeschrumpfte Scheiben zum axialen Verspannen des Rotorpakets, wie sie generell bei Reluktanzrotoren Anwendung finden, werden bei dieser erfindungsgemäßen Herstellverfahren nicht mehr benötigt. Es verbleiben lediglich die Verteilscheiben - sozusagen als "verlorene Komponente" - an den Stirnseiten des Blechpakets des Reluktanzrotors.

Der Reluktanzrotor weist damit folgende Merkmale auf, die eine Steigerung der Drehzahleignung des Reluktanzmotors beinhalten. Die Rotorbleche am Relutanzrotor weisen keine Außenstege bzw. Randstege auf. Auch die mittleren Stege, bzw. Mittenstege können in ihren Dimensionen reduziert, soder sogar weggelassen werden. Damit weist das Rotoblechpaket keine komplexen Strukturen in den einzelenen Rotorblechen oder Formschlüsse mehr auf, was einen Reluktanzmotor höchstmöglicher Effizienz schafft. Dies gelingt u.a. dadurch dass zur Stabilisierung für die Bearbeitung der Rotobleche bzw. de gedamten Rotoblechpakets ein einfaches Verklebesystem genutzt wird. Eine weitere Steigerung der Drehzhal kann durch die zusätzliche Bandage erreicht werden.

Als Vergussmasse bzw. Kleber für das Verfahren wird vorzugsweise ein thixotropiertes 2-K Epoxy zum Kleben der Bleche und Füllen der Flusssperren verwendet, mit einer Viskosität im Bereich 150000 - 500000 mPa*s.

Das Blechpaket des Rotors bzw. die Teilblechpakete werden vorzugsweise drehfest auf die Welle geschrumpft oder kalt aufgepresst.

Das Blechpaket des Rotors kann auch kalt gefügt werden, um die erforderlichen Drehmomentfestigkeit und axiale Festigkeit des Blechpakets auf der Welle zu erhalten. Die axialen Fügekräfte werden dabei reduziert.

Eine Drehmomentfestigkeit des Blechpakets auf der Welle wird auch erreicht, indem Blechzungen an Fädelnuten, die am Innendurchmesser zumindest einzelner Rotorbleche angeordnet sind und in die Wellenbohrung hineinragen.

Diese Blechzungen in den Fädelnuten werden bereits beim Stanzen der Einzelbleche mithergestellt, so dass kein zusätzlicher Fertigungsaufwand notwendig ist.

In einer Ausführung können nun die Fädelnuten und damit die Blechzungen und Zwischenraumausnehmung eines Rotorblechs durch einen Stanzprozess um 180° versetzt am Innendurchmesser der Rotorbleche positioniert werden. Damit ergibt sich bei Aneinanderreihung der Rotorbleche mit einem vorgebbaren Verdrehwinkel von 90° zwischen Fädelnuten und Zwischenraumausnehmung, die eine Blechzunge in einen Freiraum einer Zwischenraumausnehmung ragen lässt, ein Blechpaket, das jeweils einen axialen Freiraum von zumindest einer Blechdicke vor und nach jeder Blechzunge vorsieht. Damit besteht die Möglichkeit einer leicht federnden axialen Verformung der Blechzunge. Beim Fügen des Blechpaketes mit den Blechen auf eine Welle weichen die Blechzunge bzw. Blechzungen eines Bleches dabei axial in diese Zwischenraumausnehmung des benachbarten Bleches aus.

In Rotationsrichtung weist nunmehr diese Blechzunge jedoch eine höhere Steifigkeit auf. Beim axialen Fügen des Blechpakets des Rotors streifen diese Blechzungen längs der Welle über die bearbeitete Oberfläche. Dadurch wird während des Fügevorgang bereits ein geringer Formschluss in der Breite der Blechzungen mit der Welle ausgebildet. Der axiale Fügekraftanteil der Blechzungen ist im Verhältnis vergleichsweise gering, da diese sich leicht umbiegen können. Die Summe der Formschlüsse jedoch ergeben eine vergleichsweise hohe Verdrehsicherheit des gesamten Blechpakets auf der Welle.

Die durch die Blechzungen erreichte Federung gleicht Aufweitungen der Wellenbohrung durch Erwärmung im Betrieb oder Fliehkraftbeanspruchungen sicher aus, ohne Einbußen an der Positionierung, insbesondere an der Verdrehsicherheit aufzuweisen.

Ein axiales Verhaken der Blechzungen bietet somit auch eine axiale Sicherheit gegen Verrutschen des Blechpakets auf der Welle. Die Fertigungsfügemethode kann ohne zusätzliche Bearbeitung auch für üblicherweise geschrägte Blechpakete des Reluktanzrotors angewandt werden.

Um dabei eine ausreichende Drehmomentfestigkeit zu erzielen, werden somit durch zusätzliche geringe Formschlüsse der einzelnen Rotorbleche des Reluktanzrotors mit der Welle die erforderliche Drehmomentfestigkeit erreicht.

Ebenso sind andere Möglichkeiten vorhanden, das Drehmoment vom Blechpaket auf die Welle zu übertragen, wie Passfederverbindungen etc.

Durch das erfindungsgemäße Verfahren zur Herstellung eines Rotors einer Reluktanz-Synchronmaschine ergibt sich eine sichere Methode der axialen Abdichtung der Verteilscheibe zur Stirnseite des Blechpakets, da eine diesbezüglich erforderlich axiale Verspannkraft während des Ausspritzens mit Schließkraft über ein dementsprechendes Werkzeug einstellbar ist.

Damit sind vergleichsweise hoher Arbeitsdrücke der Vergussmasse für das Ausspritzen über die Verteilscheibe möglich, die im Bereich von 2-10 bar, vorzugsweise 4 bar liegen und somit u.a. eine Lunkerbildung unterbinden.

Durch die einzelnen Prozessschritte, die u.a. bei Umgebungstemperatur erfolgen, sind keine unnötigen Rüstzeiten erforderlich, wie Säuberung der Verspannwerkzeuge. Es lassen sich vergleichsweise kurze Prozesszeiten bei der Herstellung eines Reluktanzrotors und demzufolge auch bei einer dynamoelektrischen Maschine gewährleisten.

Eine mit einem derartigen Reluktanzrotor ausgestattete Reluktanz-Synchronmaschine weist eine hohe Effizienzklasse auf und ist somit auch aufgrund ihrer verbesserten Drehzahltauglichkeit besonders für den Antrieb vor allem für den Dauerbetrieb von Kompressoren, Verdichtern, Förderbändern, Lüfter etc. geeignet.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt eines Reluktanzsynchronmotors,
- FIG 2 bis 7: Herstellungsstufen eines Reluktanzrotors,
- FIG 8 bis 13: Fädelnuten und einige Ausbildungen davon.

Es sei angemerkt, dass sich Begriffe wie "axial", "radial", "tangential" etc. auf die in der jeweiligen Figur bzw. im jeweils beschriebenen Beispiel zum Einsatz kommende Achse 9 beziehen. Mit anderen Worten beziehen sich die Richtungen axial, radial, tangential stets auf eine Achse 9 des Rotors 3 und damit auf die entsprechende Symmetrieachse des Stators 2. Dabei beschreibt "axial" eine Richtung parallel zur Achse 9, "radial" beschreibt eine Richtung orthogonal zur Achse 9, auf diese zu oder auch von ihr weg, und "tangential" ist eine Richtung, die in konstantem radialem Abstand zur Achse 9 und bei konstanter Axialposition kreisförmig um die Achse 9 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Reluktanzrotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Gleiche Bezugszeichen haben in den Figuren die gleiche Bedeutung.

Die beschriebenen Ausführungen im allgemeinen Beschreibungsteil als auch in der konkreten Figurenbeschreibung können beliebig kombiniert werden. Ebenso sind auch die dort erwähnten Einzelmerkmale der jeweiligen Ausführungen kombinierbar, ohne das Wesen der Erfindung zu verlassen.

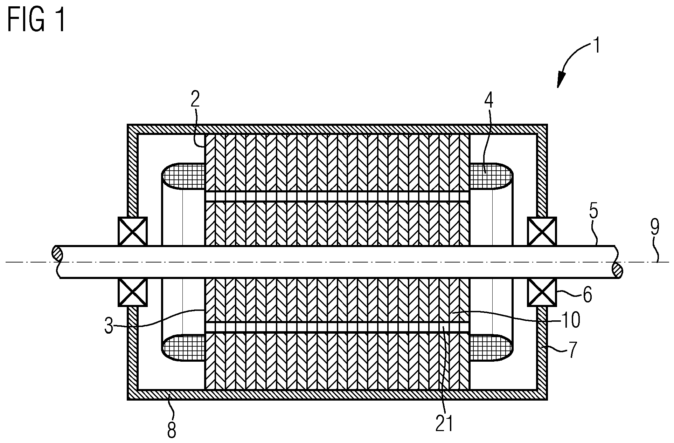

FIG 1 zeigt in einer prinzipiellen Längsdarstellung eine dynamoelektrische Maschine 1, in diesem Fall eine Reluktanz-Synchronmaschine. Diese Synchronmaschine weist einen Stator 2 auf, der in nicht näher dargestellten Nuten ein Wicklungssystem 4 aufweist, das an den Stirnseiten des Stators 2 einen Wickelkopf ausbildet. Durch elektromagnetische Wechselwirkung über einen Luftspalt 21 wird durch ein bestromtes Wicklungssystem 4 ein Reluktanzrotor 3 in Rotation um eine Achse 9 versetzt. Der Reluktanzrotor 3 ist koaxial zum Stator 2 angeordnet. Die Bleche 10 des Reluktanzrotor 3 sind als Blechpaket paketiert und mit einer Welle 5 drehfest verbunden.

Bei diesen Reluktanzmaschinen 1 wird nunmehr von dem Stator 2 ein magnetisches Wechselfeld erzeugt, durch welches der Reluktanzrotor 3 im Wesentlichen infolge der Reluktanzkraft angetrieben wird. Sowohl der Reluktanzrotor 3 als auch der Stator 2 weisen üblicherweise Blechpakete aus axial geschichteten Blechen auf, die voneinander vorzugsweise durch einseitige Lackschichten isoliert sind. Die Bleche bestehen aus Material mit hoher magnetischer Permeabilität, z. B. Elektroblech. Jedes Rotorblech 10 des Reluktanzrotors 3 ist in sich strukturiert und weist eine Anzahl von Aussparungen auf, die dazu dienen, den Verlauf des Magnetfelds zu beeinflussen. Die Aussparungen werden als nicht-flussführende oder nicht-magnetflussleitende Bereiche (Flusssperre 14) bezeichnet, während die Rotorbleche 10 flussführende oder magnetflussleitende Bereiche (Flussleitbereiche13) darstellen.

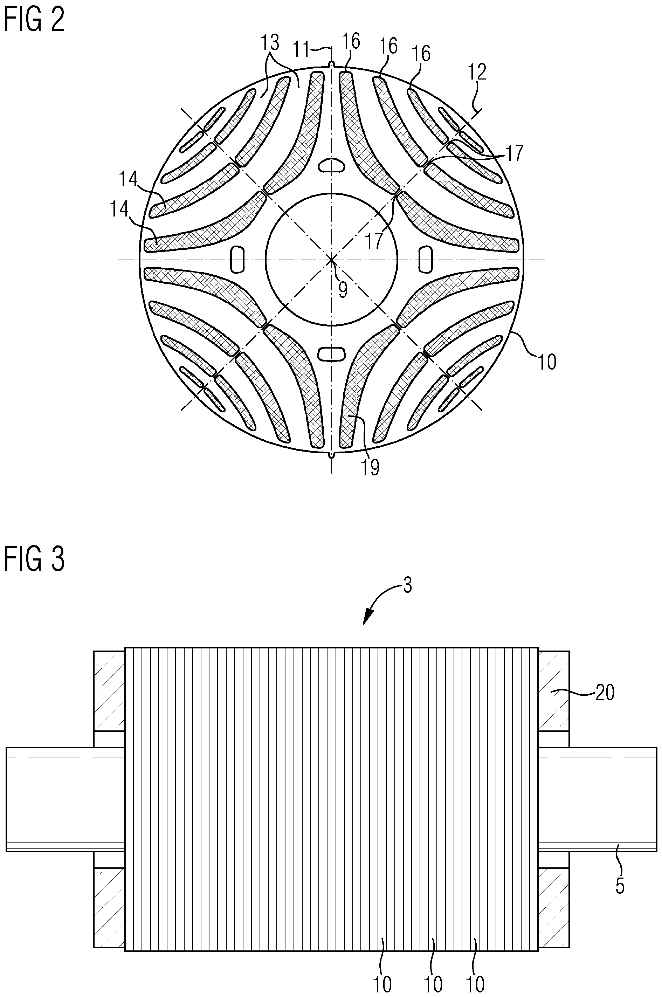

Die Flussleitbereiche 13 sind voneinander durch unmagnetische Bereiche (Flusssperren 14) getrennt, die im gezeigten Ausführungsbeispiel nach FIG 2 überwiegend bogenartige Ausnehmungen sind, welche insbesondere durch ein spanendes Trennverfahren wie z.B. Ausstanzen ausgebildet werden. In der Reluktanztechnik wird der magnetische Fluss direkt ohne Dämpfung des Stators 2 über den Luftspalt 21 in den Reluktanzrotor 3 geführt.

Reluktanzrotoren 3 sind in ihrem grundsätzlichen Aufbau mit magnetischen Flussleitbereichen 13 und Flusssperren 14 ausgeführt. Damit werden die erforderlichen Induktivitätsunterschiede im Reluktanzrotor 3 erreicht, um eine dementsprechende Drehmomentausbeute einer synchronen Reluktanzmaschine 1 zu erhalten.

Diese in Umfangsrichtung betrachtet abwechselnd aufweisenden magnetischen Vorzugsrichtungen (d-Achse 11) und Richtungen, die einen magnetisch hohen Widerstand aufweisen (q-Achse 12), bilden damit die magnetischen d- und q-Achsen 11, 12 des Reluktanzrotor 3.

Ausstanzungen der einzelnen Rotorbleche 10 bilden, in einem Blechpaket paketiert, die im Wesentlichen axial verlaufenden Flusssperren 14. Die Flusssperren 14 des Blechpakets des Reluktanzrotor 3 verlaufen dabei entweder achsparallel, geschrägt oder gestaffelt.

Bei einer achsparallelen Anordnung fluchten die Flusssperren 14. Bei einer geschrägten Anordnung, ist jedes Rotorblech 10 gegenüber dem axial nachfolgenden Rotorblech 10 um einen vorgebbaren Winkel umfänglich versetzt angeordnet. Ein aus axial hintereinander angeordneten Teilblechpaketen gebildetes Blechpaket, dessen Teilblechpakete um einen vorgebbaren Winkel umfänglich versetzt angeordnet sind, bilden ein gestaffeltes Blechpaket 3.

Das Blechpaket des Reluktanzrotors wird vorzugsweise auf die Welle 5 zur Drehmomentenübertragung geschrumpft oder kalt gepresst.

Ebenso sind andere Möglichkeiten vorhanden, das Drehmoment vom Blechpaket auf die Welle 5 zu übertragen, wie Passfederverbindungen etc. Eine Paketierung des Blechpakets kann auch über achsparallel verlaufende Zugankerverbindungen erfolgen.

Eine Drehmomentfestigkeit des Blechpakets auf der Welle 5 kann auch erreicht werden, indem Blechzungen 30 an Fädelnuten 31, die am Innendurchmesser zumindest einzelner Rotorbleche 10 angeordnet sind und in die Wellenbohrung 34 hineinragen. Idealerweise ragen diese ca. 0,2 bis 0,3 mm in die Wellenbohrung 34 hinein. Der Innenradius R1 des Rotorblechs 10 ist dabei immer größer als der Radius R2 der Blechzungen 30. Je nach Achshöhe der dynamoelektrischen Maschine 1 können diese Zahl-Werte auch überschritten bzw. unterschritten werden.

Diese Blechzungen 30 in den Fädelnuten 31 werden bereits beim Stanzen der Rotorbleche 10 mithergestellt, so dass kein zusätzlicher Fertigungsaufwand notwendig ist.

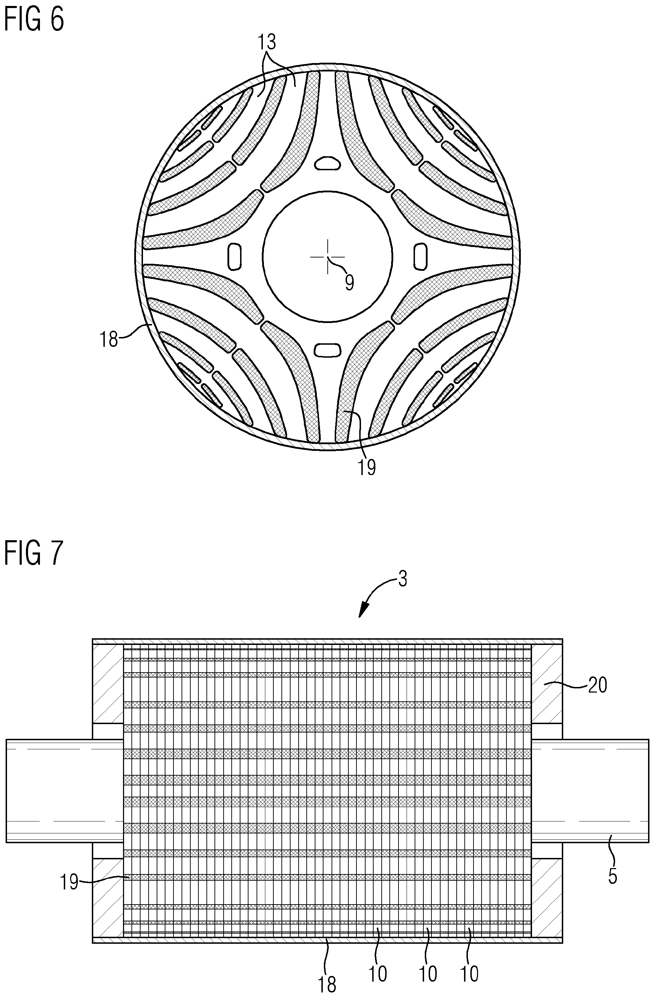

FIG 7 zeigt ein Rotorblech 10 gemäß FIG 2, mit einander gegenüberliegenden Fädelnuten 31. Diese Fädelnuten 31 liegen dort auf der d-Achse 11. Sowohl die Anzahl diesr Fädelnuten 31 eines Rotorblechs 10, als auch deren Verteilung und/oder Positionierung am Innendurchmesser kann variieren.

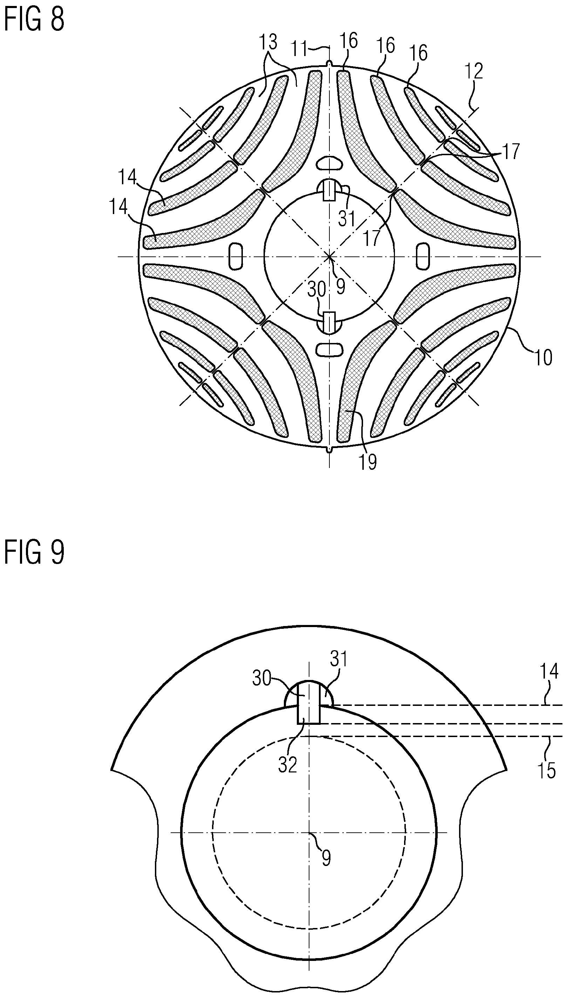

FIG 8 zeigt eine beispielhafte Detailansicht eines Rotorbleches 10, das auf der Welle 5 positioniert ist und in dem eine Blechzunge 30 der Fädelnut 31 in die Welle 5 eingreift und somit im Bereich des axialen Fügens der Blechzungen 30 auf der Welle 5 u.a. zur Reduzierung der Rauhigkeit beiträgt.

In einer weiteren Detaildarstellung in einem Teillängsschnitt gemäß FIG 9, wird nunmehr die axiale Abfolge der Rotorbeche 10 auf der Welle 5 dargestellt. Die Blechzungen 30 sind dabei an ihrem Ende 32 abgebogen und haben so zur Reduzierung der Rauigkeit beigetragen. Die Blechzungen 30 der Fädelnuten 31 weichen, axial betrachtet, in den Zwischenraum 33 des benachbarten Rotorbleches 10 aus.

Nach dem Fügevorgang des Blechpakets bzw- der einzelnen Rotorbleche 10 auf die Welle 5 sind nunmehr Formschlussriefen am Außendurchmesser der Welle 5 festzustellen.

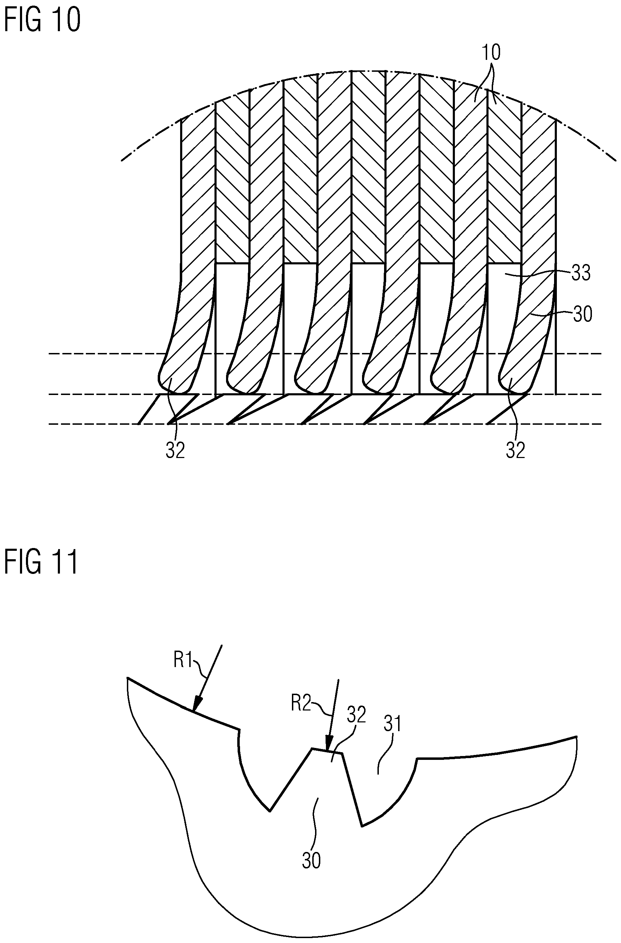

FIG 10 zeigt eine Blechzunge 30 einer Fädelnut 31, die eine trapezförmige Gestaltung aufweist. Dies bewirkt eine gegenüber der Blechzunge 30 mit parallelen Flanken - gemäß FIG 11 - eine axial größere Rückstellkraft des Endes 32 der Blechzunge 30. Damit wird die Drehmomentübertragung des Blechpakets auf die Welle 5 verbessert.

Grundsätzlich sind auch andere Formgebungen der Blechzungen 30 möglich, um je nach Bedarf eine geringe oder größere axiale Rückstellkraft an den Enden 32 der Blechzungen 30 zu erhalten. Die Rückstellkraft wird somit von der Differenz der Radien R1 (Innenradius Rotorblech 10) und R2 (Radius der Blechzungen 30), als auch vom Material der Rotorbleche 10, von der Formgebung der Blechzungen 30 als auch der Anzahl der Fädelnuten 31 am Innendurchmesser eines Rotorblechs 10 beeinflusst.

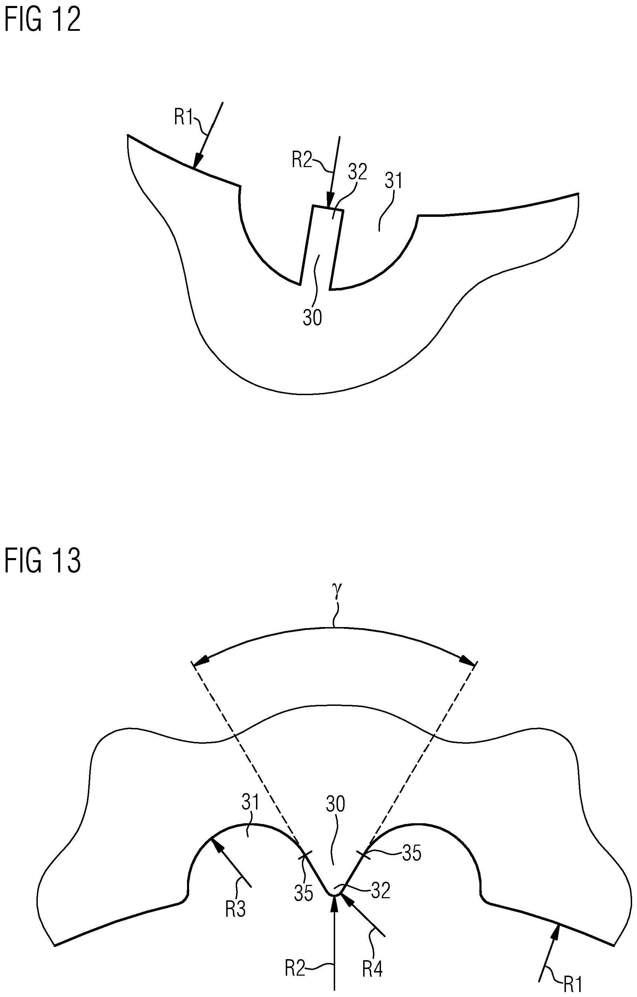

So zeigt FIG 13 eine weitere Fädelnut 31. Diese Fädelnut 31 wird vorzugsweise am Innendurchmesser des Rotorblechs 10 durch zwei Teilkreise mit einem Radius R3 gebildet, die in ihrem Verlauf, ab einem vorgebbaren Übergangspunkt 35 vom Radius R3 jeweils in eine Gerade übergehen und so die Blechzunge 30 bilden, die mit den Geraden einen Winkel γ einschließt. Durch Wahl der Übergangspunkte 35 an den Teilkreisen mit Radius R3 ist der Winkel γ und damit u.a. auch die Biegesteifigkeit der Blechzunge 30 einstellbar.

Über den Radius R4 des Endes 32 der Blechzunge 30 lässt sich u.a. auch die Riefenbildung auf der Welle 5 beim axialen Fügen der Rotorbleche 10 beeinflussen.

In einer möglichen Ausführung können nun die Fädelnuten 31 und damit die Blechzungen 30 und Zwischenraumausnehmung 33 eines Rotorbleches 10 durch einen Stanzprozess um 180° versetzt am Innendurchmesser der Rotorbleche 10 positioniert werden. Damit ergibt sich bei axialer Aneinanderreihung der Rotorbleche 10 auf der Welle 5 mit einem vorgebbaren Verdrehwinkel von 90° zwischen Fädelnuten 31 und Zwischenraumausnehmung 33, die eine Blechzunge 30 in einen Freiraum einer Zwischenraumausnehmung 33 ragen lässt, ein Blechpaket, das jeweils einen axialen Freiraum von einer Blechstärke vor und nach jeder Blechzunge 30 vorsieht. Damit besteht die Möglichkeit einer leicht federnden axialen Verformung der Blechzunge 30. Beim Fügen der Rotobleche 10 auf die Welle 5 weichen die Blechzunge 30 bzw. Blechzungen 30 eines Rotorbleches 10 dabei axial in diese Zwischenraumausnehmung 33 des benachbarten Rotorblechs 10 aus.

In Rotationsrichtung weist nunmehr diese Blechzunge 30 jedoch eine höhere Steifigkeit auf. Beim axialen Fügen des Blechpakets oder der einzelnen Rotorbleche 10 des Reluktanzrotors 3 streifen diese Blechzungen 30 längs der Welle 5 über deren bearbeitete Oberfläche. Dadurch wird während des Fügevorgang bereits ein geringer Formschluss in der Breite der Blechzungen 30, insbesondere deren Enden 32 mit der Welle 5 ausgebildet. Der axiale Fügekraftanteil der Blechzungen 30 ist im Verhältnis zur hauptsächlich zylindrischen Fassung vergleichsweise gering, da diese sich leicht umbiegen können. Die Summe der Formschlüsse jedoch ergeben eine vergleichsweise hohe Verdrehsicherheit des gesamten Blechpakets auf der Welle 5.

Die durch die Blechzungen 30 erreichte Federung des Blechpakets gleicht Aufweitungen der Wellenbohrung durch Erwärmung während der weiteren Fertigung und im Betrieb der Reluktanzmaschine 1 oder Fliehkraftbeanspruchungen sicher aus, ohne Einbußen an der Positionierung und Verdrehsicherheit der einzelnen Rotorbleche 10 oder des Blechpakets.

Das axiale Verhaken der Blechzungen 30 auf der Welle 5 bietet somit auch eine axiale Sicherheit gegen Verrutschen des Blechpakets auf der Welle 5. Die Fertigungsfügemethode kann ohne zusätzliche Bearbeitung auch für üblicherweise geschrägte Blechpakete des Relukanzrotors 3 angewandt werden.

Um dabei eine ausreichende Drehmomentfestigkeit zu erzielen, werden somit durch zusätzliche geringe Formschlüsse der einzelnen Rotorbleche 10 des Reluktanzrotors 3 mit der Welle 5 die erforderliche Drehmomentfestigkeit erreicht.

Nachdem Aufpressen und Paketieren der Rotorbleche 10 auf die Welle 5 wird das gepresste Blechpaket des Reluktanzrotors 3 gebildet. Die einzelnen Rotorbleche 10 weisen einen umlaufenden Außenring auf. Mit anderen Worten, die Flusssperrren 14 weisen an ihren radialen Rändern noch die Randstege 16 auf.

Danach wird mindestens eine Verteilscheibe 20 an den Stirnseiten des Blechpakets 6 platziert und positioniert, wie dies FIG 3 zu entnehmen ist.

Unter axialer Verspannung des Blechpakets wird ein Kleber 19 über die Verteilscheibe 20 eingespritzt, so dass sich zumindest die Flusssperren 14 mit Kleber füllen. Vorzugsweise wird ein zwei-Komponentenkleber verwendet.

Die Verteilscheibe 20 kann optional auch zum Auswuchten des Reluktanzrotors 3 genutzt werden, indem sie z.B. mit Zapfen ausgestattet ist, um Wuchtscheiben aufzusetzen. Ebenso kann ein negatives Wuchten durch Abbohren vorgegebener Materialanhäufungen durchgeführt werden. Alternativ kann die Verteilscheibe 20 auch Konturen aufweisen, um Wuchtgewichte einzubringen.

Die Verteilscheibe 20, welche dem erfindungsgemäßen Herstellungsprozess eines Reluktanzrotors 3 zugrunde liegt und zumindest an einer Stirnseite des Blechpakets des Reluktanzrotors 3 angebracht wird, ist über Positionierelemente der Verteilscheibe 20 an der oder den Stirnseite(n) des Blechpakets des Reluktanzrotors 3 positioniert und fixiert. Damit wird eine axiale Abstützung der Verteilscheibe 20 auf der Welle 5 vermieden, was die Positionierung der Verteilscheibe 20 weiter vereinfacht.

Die Fixierung der Verteilscheibe 20 an der Stirnseite erfolgt über Positionierelemente, die beispielsweise zapfen- oder dübelähnlich ausgeführt sind und mit der Verteilscheibe 20 einstückig ausgebildet sind.

Die Verteilscheibe 20 wird mittels ihren Positionierelementen vor dem Vergussprozess axial an der Stirnseite des Blechpakets des Reluktanzrotors 3 fixiert, indem die Positionierelemente in vorhandene, dazu korrespondierenden Öffnungen des Blechpakets, wie Aussparungen, Trägheitsausnehmungen, Flusssperren 14 etc. verankert, insbesondere kraftschlüssig verankert werden.

Die "Widerstandskraft" der Positionierelemente bzw. Länge der Zapfen oder Dübel mit ihrer Klemmfunktion ist somit so zu bemessen, dass diese zumindest gleich, aber besser, höher ist als die während des Herstellprozesses auftretenden axialen Abstoßkräfte, so dass sich die Verteilscheibe 20 während des Vergussprozesses nicht von der Stirnseite des Blechpakets ablöst und weiterhin seinen axialen Formschluss beibehält.

Die angegossenen Zapfen sind deshalb erfindungsgemäß mit einem leichten Übermaß gegenüber den dazu korrespondierenden Öffnungen des Blechpakets ausgebildet, idealerweise mit einer Kreuzkontur.

Als Alternative dazu ist auch eine Spreizform der Positionierelemente ähnlich einem Dübel vorstellbar.

Diese Positionierelemente ermöglichen ein koaxiales Verklemmen oder Verkrallen der Verteilscheibe 20 an der Stirnseite des Blechpakets.

Diese Verteilscheibe 20 wird formschließend, stirnseitig an das Blechpaket angebracht und kann optional im Nachgang auch zur Wuchtung des Reluktanzrotors 3 genutzt werden.

Die Verteilscheibe 20 weist auf der dem Blechpaket des Rotors zugewandten Seite zumindest einen umlaufenden, zum Blechpaket hin, insbesondere zu den Polen des Reluktanzrotors 3, offenen Verteilkanal auf.

Auf der dem Blechpaket abgewandten Seite der Verteilscheibe 20 ist zumindest eine Injektionsöffnung, für eine, insbesondere druckbehaftete Zuführung für einen Kleber vorgesehen, um den Verteilkanal mit einer Klebermasse 19 und damit das Blechpaket des Reluktanzrotors 3 zu füllen.

Optional weist der Verteilkanal - im umfänglichen Verlauf betrachtet - im Bereich zumindest einer- vor allem einer volumenstarken - Flusssperre 14 eines Pols des Reluktanzrotors 3 Erweiterungen des Verteilkanals auf, um ausreichend Vergussmasse 19 für den jeweiligen magnetischen Pol bzw. dessen Flusssperren 14 bereitstellen zu können.

Der Verteilkanal und optional dessen Erweiterung schließen mit der Stirnseite des Blechpakets formschlüssig und dicht ab, um während des Vergussprozesses einen dementsprechenden Druck und damit die erforderlichen Scherkräfte in der Klebermasse 19 aufbauen zu können. Der umlaufende Verteilkanal dient der Versorgung der Flusssperren 14 der magnetischen Pole mit dem Kleber 19.

Die Verteilscheibe 20 kann also einen oder mehrere umfänglich verlaufende Verteilkanäle und/oder Injektionsöffnungen aufweisen, um eine möglichst zügige Füllung des Blechpakets bzw. zumindest dessen Flusssperren 14 zu erhalten.

Der Verteilkanal kann in seinem umfänglichen Verlauf kreisrund ausgeführt sein. Ebenso ist es möglich den Verteilkanal mit radial und/oder axial ersteckenden Erweiterungen und/oder gewellt auszuführen, um möglichst schnell einen ausreichenden Füllgrad in den Flusssperren 14 zu erhalten. Dabei "folgt" der Verlauf des Verteilkanals im Wesentlichen der Polanordnung. Dies betrifft sowohl den Überdeckungsbereich der Verteilscheibe 20 als auch den Überdeckungsbereich des Verteilkanals an der Stirnseite des Blechpakets.

Die Verteilscheibe 20 ist optional auf der dem Verteilkanal abgewandten Seite der Verteilscheibe 20 zusätzlich mit Lüfterflügeln ausgestattet, um im Betrieb der Reluktanz-Synchronmaschine bewegte Luft im Motorraum, insbesondere Wickelkopfraum zu erzeugen und somit eine Entwärmung des Reluktanzrotors 3 und/oder des Wickelkopfraumes an der Stirnseite des Stators 2 zu verbessern.

Die Verteilscheibe 20 ist als Spritzgussteil, als Tiefziehteil oder in 3D Druck-Verfahren hergestelltes Teil ausgeführt. Vorzugsweise ist die Verteilscheibe 20 aus Kunststoff oder nicht magnetischem Metall gefertigt. Die Positionierelemente, wie Zapfen oder Dübel oder beispiels-weise auch die optionalen Lüfterflügel, zusammen mit Mittel zur Wuchtung, bilden mit der Verteilscheibe 20 eine einstückige Komponente.

Während des Ausspritzvorgangs der Ausnehmungen über die Verteilscheibe kann das Blechpaket des Rotors über diese Verteilscheiben mit einem Werkzeug zusätzlich axial verspannt werden, um eine Abdichtung der Verteilscheibe zum Blechpaket bzw. der einzelnen Bleche zueinander auf jeden Fall zu gewährleisten.

Durch Einsatz der Verteilscheibe 20 und deren Abdichtung des zur Stirnseite hin offenen Verteilkanals wird ein optional zusätzlich eingesetztes Verspannwerkzeug vor Verschmutzung geschützt und kann deshalb im Anschluss für Folgeaktionen unmittelbar weiter benutzt werden.

Das Verspannwerkzeug dient auch der Paketierung des Blechpakets des Reluktanzrotors 3, insbesondere während des Ausspritzvorganges der Flusssperren 14. Die Paketierung - also eine axiale Krafteinwirkung auf das Blechpaket - erfolgt dabei über die Verteilscheiben 20 und/oder auch über den "radialen Freiraum" zwischen Verteilscheibe 20 und Welle 5 über das Verspannwerkzeug.

Die Verteilscheibe 20 kann in Richtung Blechpaket elastische Geometrien aufweisen, alternativ Dichtungsmaterial, welches eine axiale Abdichtung während der Verspannung und während des Vergussprozesses mit Klebemasse verbessern.

Optional werden auf beiden Seiten des Blechpakets des Reluktanzrotors 3, also den Stirnseiten des Blechpakets, Verteilscheiben 20 positioniert, um die Paketierung der Bleche zu verbessern und/oder den Füllvorgang der Flusssperren 14 zu beschleunigen. Dabei ist zumindest eine Verteilscheibe 20 mit einer Zuführung, also einer Kleber-Versorgungs-Öffnung , also Injektionsöffnung ausgestattet. Um beide Verteilscheiben 20 gleich zu gestalten, kann generell eine Versorgungsbohrung vorgesehen werden, die durch eine Gusshaut verschlossen ist. Bei Bedarf kann diese Gusshaut vor dem Vergießen aus der Verteilscheibe 20 ausgebrochen werden. Es müssen demnach weniger Teile logistisch vorgehalten werden.

Dieses Herstellverfahren eignet sich auch für - axial betrachtet - gestaffelte Teilblechpakete des Rotors. Die Ausnehmungen der einzelnen Pole weisen in ihrem axialen Verlauf ausreichende Überschneidungen auf, um die Klebermasse auch bis an das andere axiale Ende des Blechpakets eines Pols fördern zu können. Flusssperren 14 axial folgender Teilblechpakete eines Pols haben in ihrer Fläche ausreichend Überschneidung um eine ordnungsgemäße Befüllung zu gewährleisten. Das gesamte Blechpaket hat jedoch - wie oben bereits ausgeführt - mindestens auf einer Stirnseite eine Verteilscheibe 20.

Bei nur einer Verteilscheibe 20 sind die Ausnehmungen auf der anderen Stirnseite des Blechpakets verschlossen, z.B. durch eine Endscheibe, so dass keine Klebermasse 19 austreten kann und sich der thixotropische Effekt einstellen kann.

Vorteilhafterweise erfolgt die Beschickung des Reluktanzrotors 3 mit Klebermasse 19 als aufsteigender Verguss bei erhöhtem Vergussdruck. Insbesondere durch einen aufsteigenden Verguss kann in einfacher Art und Weise eine blasenfreie Applikation herbeigeführt werden.

Der Einfüllvorgang des Klebers 19 erfolgt unabhängig davon, ob die Pole des Reluktanzrotors 3 achsparallel verlaufen, geschrägt verlaufen oder gestaffelt angeordnet sind. Entscheidend ist immer, dass die Klebermasse 19 axial durch die Flusssperren 14 eines Pols und/oder die oben erwähnten Spalte dringen kann und die Flussperren 14 eines Pols füllen kann.

Der flüssige Kleber 19 wird insbesondere über die gesamte axiale Länge der Flusssperren 14 des Reluktanzrotors 3 vorzugsweise unter Druck in die Flusssperren gedrückt oder gespritzt und verbindet somit alle Rotorbleche 10 miteinander zu einem starren und steifen Rotoblechpaket.

Unabhängig von der Gestaltung des Rotorblechpakets (gerade, geschrägt, gestaffelt) ist immer, dass der Kleber 19 oder ein Harz axial durch die Flusssperren 14 dringt und optional sogar zwischen den Rotorblechen 10 radial kapellieren kann.

Entscheidend, insbesondere für die weiteren Verfahrensschritte bei der Herstellung des Reluktanzrotors 3 ist dabei, dass ein starrer Verbund der Rotorbleche 10 entsteht.

Das Rotorblech 10 dieses Reluktanzrotors 3 zeichnet sich dadurch aus, dass im fertigen Zustand des Reluktanzrotors 3 zumindest einige, vorzugsweise alle Flusssperren 14 zum Umfang des jeweiligen Rotorblechs 10 hin offen sind, so dass beide Enden der Flusssperren 14 in den äußeren Umfang münden. Die Rotorbleche 10 weisen deshalb keinen üblichen geschlossenen magnetisch leitfähigen Außenring oder Randstege 16 auf. Der Außenumfang des Reluktanzrotors 3 weist lediglich eine Bandage 18 auf, wie später noch detailierter ausgeführt wird.

Dies wird fertigungstechnisch realisiert, indem die Rotorbleche 10 zunächst noch einen üblichen Außenring bzw. Randstege 16 aufweisen und der Außenring in einem nachfolgenden Bearbeitungsschritt z.B. durch Abdrehen entfernt wird. Zudem sind keine radialen Mittenstege zwischen den radialen angeordneten Flussleitbereichen 13 eines Pols vorhanden, so dass die Flusssperren 14 von einem (abgedrehten) offenen Ende zum anderen (abgedrehten) offenen Ende hin durchgehend sind.

Trotz der fehlenden - also abgedrehten - Randstege 16 wird ein stabiler Verbund der Rotorbleche 10 erreicht, indem beim Zusammenbauen des Reluktanzrotors 3 die übereinandergeschichteten Rotorbleche 10 zusammengepresst werden und unter axialem Druck ein flüssiger Werkstoff, z.B. flüssiger Kleber 19 in die Flusssperren 14 eingespritzt wird. Beim Aushärten des Klebers 19 entsteht somit ein starrer Körper in dem sich die losen Lamellen der einzelnen Rotorbleche 10 nunmehr nicht verschieben können und somit auch beim Abdrehen ihre gegenseitige Lage beibehalten.

Nach dem Überdrehen des Rotoblechpakets, bei dem - wie oben beschrieben - die Randstege 16 der Flusssperren 14 beseitigt werden, sodass die Flusssperren 14 eines Pols idealerweise von einem Ende zum anderen Ende hin offen sind, beginnt ein Träufelvorgang, bei dem ein Harz oder ein Harz-Härter-System auf die abgedrehte Außenfläche des Rotorblechpakets gegeben wird. Dieses Träufeln geschieht vorzugsweise unter gleichmäßiger Rotation des Rotorblechpakets.

Zeitlich davor kann eine Glas- oder Kohlefaser-Bandage unter einer vorgebbaren Vorspannung auf das abgedrehte Rotorblechpakets gewickelt werden.

Dieses Auflegen der Bandage kann auch während es Träufelns oder danach stattfinden.

Vortelhafterweise bieten die Verteilscheibe 20 Geometrien zum Einhängen dieser Bandage 18 sowohl am Ende als auch am Anfang der Bandage 18. Dies setzt jedoch voraus, dass an beiden Enden des Rotorblechpakets demenentsprechende Verteilscheiben 20 vorgesehen sind.

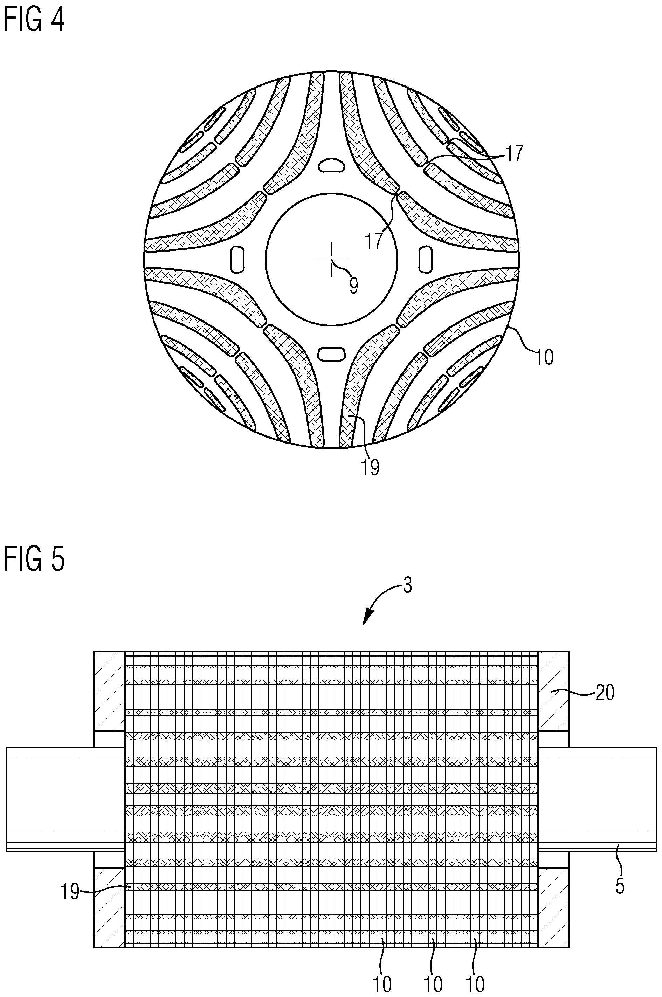

FIG 2, FIG 4, FIG 5 zeigen im Querschnitt je einen vier-poligen Reluktanzrotor 3 mit beispielhaft dargestellten Flusssperren 14. Zwischen den Flusssperren 14 sind die magnetischen Flussleitbereiche 13 angeordnet, die zur Drehmomentbildung des Reluktanzmotors 1 beitragen.

Zur Verbesserung der Stabilisierung kann es je nach Achshöhe der Reluktanzmaschine 1 auch nötig sein, (z. B. radial verlaufende) Mittenstege 17 zwischen den flussführenden Bereichen eines Pols zu belassen. Dies führt allerdings zu unerwünschten Streuflüssen, die die Effektivität der Maschine reduzieren.

In der dargestellten Ausführung sind in radialer Richtung pro Pol vier Flusssperren 14 gezeigt, es können jedoch auch drei, vier, fünf oder mehr Flusssperren 14 in radialer Richtung vorgesehen sein.

Ebenso ist die Erfindung bei zwei- vier- oder mehrpoligen Reluktanzläufern 4 einsetzbar.

Durch das erfindungsgemäße Herstellungsverfahren eines Reluktanzrotors 3 wird eine Reluktanz-Synchronmaschine mit vergleichsweise hoher Effizienzklasse geschaffen, die aufgrund ihrer verbesserten Drehzahltauglichkeit besonders für den Antrieb vor allem für den Dauerbetrieb von Kompressoren, Verdichtern, Förderbändern, Lüfter etc. geeignet.

Die Effizienzsteigerung wird dadurch geschaffen, dass nunmehr die Rotorbleche 10 elektromagnetisch optimiert werden können, da u.a. die Randstege 16 vermieden werden. Durch unterschiedliche Magnetisierungszustände haben die Außenringe bei Reluktanzrotren im Stand der Technik schwankende Sättigungszustände, die sich wiederum ungünstig auf das Betriebsverhalten des Reluktanzmotors 1 auswirken. Durch den erfindungsgemäßen Wegfall der Außenringe bzw. Randstege 16 wird somit das Betriebsverhalten des Reluktanzmotors 1 verbessert.

### Bezugszeichenliste

- 1: dynamoelektrische Maschine
- 2: Stator
- 3: Reluktanzrotor
- 4: Wicklungssystem
- 5: Welle
- 6: Lager
- 7: Lagerschild
- 8: Gehäuse
- 9: Achse
- 10: Rotorblech
- 11: d-Achse
- 12: q-Achse
- 13: Flussleitbereich
- 14: Flusssperre
- 15: Wellenbohrung
- 16: Randsteg
- 17: Mittensteg
- 18: Bandage
- 19: Gapfiller/Kleber
- 20: Verteilscheibe
- 21: Luftspalt
- R1,R2,R3,R4: Radien an der Wellenbohrung
- γ: Winkel der Blechzunge
- 30: Blechzunge
- 31: Fädelnut
- 32: Ende der Blechzunge
- 33: Zwischenraum
- 34: Wellenbohrung
- 35: Übergangspunkt

## Patentansprüche

1. Verfahren zur Herstellung eines Reluktanzrotors (3) einer dynamoelektrischen Maschine (1),
- Fertigen mehrerer Rotorbleche (10), die axial entlang einer Drehachse (9) auf einer Welle (5) hintereinander zu einem Blechpaket des Reluktanzrotors (3) angeordnet werden und dabei je nach Blechschnitt zwei- vier- oder mehrere geradzahlige Pole bilden, indem pro Rotorblech (10) Flussleitbereiche (13) durch unmagnetische, bogenartige Flusssperren (14) voneinander getrennt sind und so q-Achsen (12) und d-Achsen (11) des Reluktanzrotors (3) bilden, wobei die Rotorbleche einstückig ausgeführt sind und einen aus Stegen gebildeten Außenring bilden, wobei über zumindest an einer Stirnseite des Blechpakets angeordnete Verteilscheibe (20) die zumindest radial außenliegenden Flusssperren (14) über die gesamte axiale Länge des Reluktanzrotors (3) mit einem flüssigen Kleber (19) bei axialer Verspannung des Blechpakets ausgefüllt werden, so dass sich die vorgesehenen Flusssperren (14) mit Kleber (19) füllen,
- Verfestigen des mit Kleber versehenen Blechpakets,
- Überdrehen des verfestigte Blechpaket, wobei die den Außenring bildenden Stege entfernt werden, so dass die Flusssperren (14) nach außen hin metallisch offen sind und hierdurch die radial außenliegenden Enden der Flusssperren (14) in den äußeren Umfang der Rotorbleche (10) münden,
- Aufträufeln von Harz oder einem Harz-Härtersystem auf die abgedrehte Außenfläche des Reluktanzrotors (3),
- zeitlich davor oder zeitgleich oder im zeitlichen Anschluss, an diesen Träufelvorgang wird eine Bandage auf den abgedrehten Außenumfang des Reluktanzrotors (3) gespannt.

2. Verfahren zur Herstellung eines Reluktanzrotors (3) einer dynamoelektrischen Maschine (1), nach Anspruch 1, **dadurch gekennzeichnet, dass** das Befüllen der Flusssperren (14) mit Kleber unter einem vorgebbaren Druck erfolgt.

3. Verfahren zur Herstellung eines Reluktanzrotors (3) einer dynamoelektrischen Maschine (1), nach Anspruch 1 oder Anspruch 2, **dadurch gekennzeichnet, dass** die Bandage Glas- oder Kohlefaser aufweist.

4. Verfahren zur Herstellung eines Reluktanzrotors (3) einer dynamoelektrischen Maschine (1), nach einem der vorhergehenden Ansprüche, **dadurch gekennzeichnet, dass** die Bandage (18) einen Anfang und ein Ende aufweist, wobei zumindet der Anfang der Bandage (18) am Außenumfang der Verteilscheibe (20) zugfest angebracht wird.

5. Verfahren zur Herstellung eines Reluktanzrotors (3) einer dynamoelektrischen Maschine (1), nach einem der vorhergehenden Ansprüche, **dadurch gekennzeichnet, dass** die Bandage (18) mit einer vorgebbaren Steigung und mit einer Vorspannung auf den abgedrehten Außenumfang aufgebracht wird.

6. Verfahren zur Herstellung eines Reluktanzrotors (3) einer dynamoelektrischen Maschine (1), nach einem der vorhergehenden Ansprüche, **dadurch gekennzeichnet, dass** als Kleber (19) vorzugsweise ein 2 Komponentenkleber verwendet wird.

7. Verfahren zur Herstellung eines Reluktanzrotors (3) einer dynamoelektrischen Maschine (1), nach einem der vorhergehenden Ansprüche, **dadurch gekennzeichnet, dass** die Verteilscheibe (20) an den Stirnseiten des Blechpakets des Reluktanzrotors (3) Möglichkeiten aufweist eine Wuchtung des Reluktanzrotors (3) durchzuführen.

8. Verfahren zur Herstellung eines Reluktanzrotors (3) einer dynamoelektrischen Maschine (1), nach Anspruch 7, **dadurch gekennzeichnet, dass** die Verteilscheibe (20) Zapfen aufweist, um Wucht-Scheiben aufzusetzen.

9. Verfahren zur Herstellung eines Reluktanzrotors (3) einer dynamoelektrischen Maschine (1), nach Anspruch 7, **dadurch gekennzeichnet, dass** die Verteilscheibe (20) negatives Wuchten durch Abtragen von Material an der Verteilscheibe (20) ermöglicht.

10. Verfahren zur Herstellung eines Reluktanzrotors (3) einer dynamoelektrischen Maschine (1), nach Anspruch 7, **dadurch gekennzeichnet, dass** die Verteilscheibe (20) Konturen aufweist, um Wucht-Massen an der Verteilscheibe (20) an- und/oder einzubringen.

11. Reluktanzrotor, hergestellt nach einem der vorhergehenden Ansprüche, **dadurch gekennzeichnet, dass** das Rotorblechpaket des Reluktanzrotors (3) eine Bandage und keine Randstege (16) aufweist, wobei die Flusssperren (14) zu einem Luftspalt (21) des Reluktanzmotors (1) hin elektromagnetisch offen sind.

12. Reluktanzmotor (1) mit einem Reluktanzrotor (3) nach Anspruch 11, hergestellt nach einem der Ansprüche 1 bis 10, **dadurch gekennzeichnet, dass** bei einer hohen Effizienz des Reluktanzmotors (1) eine Drehzahl bis zu 100 m /s Umfangsgeschwindigkeit möglich ist.
